# EUROPÄISCHE PATENTSCHRIFT

(11) **EP 1 198 682 B1**
(45) Veröffentlichungstag und Bekanntmachung des Hinweises auf die Patenterteilung: **16.11.2005**
(21) Anmeldenummer: 00956254.7
(22) Anmeldetag: 21.06.2000
(51) Int. Cl.: F16L 37/40, F01M 11/03

(54) **SCHNELLKUPPLUNG FÜR DAS ÖFFNEN EINES VENTILS**
RAPID-ACTION COUPLING FOR OPENING A VALVE
RACCORD RAPIDE POUR L'OUVERTURE D'UNE SOUPAPE

(30) Priorität: 23.07.1999 DE 19933849
(43) Veröffentlichungstag der Anmeldung: 24.04.2002
(73) Patentinhaber: Mann + Hummel GmbH, 71638 Ludwigsburg (DE)
(72) Erfinder: JAINEK, Herbert, D-74074 Heilbronn (DE)
(74) Vertreter: Voth, Gerhard
(86) Internationale Anmeldenummer: PCT/EP2000/007040
(87) Internationale Veröffentlichungsnummer: WO 2001/007819

(56) Entgegenhaltungen:
- WO-A-93/16315
- US-A- 3 538 950
- US-A- 4 208 034

## Beschreibung

### Stand der Technik

Die Erfindung betrifft eine ein Ventil aufweisende Schnellkupplung für das Öffnen eines Ventils.

Solche Schnellkupplungen sind beispielsweise im Haus- und Gartenbereich bekannt und dienen dazu, Schläuche oder Ähnliches miteinander zu verbinden. In vielen Bereichen kann eine solche Schnellkupplung nicht eingesetzt werden, da beispielsweise bei der Anwendung an Behälter, die heiße Medien oder aggressive Medien beinhalten, diese Schnellkupplungen den hohen Anforderungen nicht genügen. So ist beispielsweise an Brennkraftmaschinen zum Ablassen des Öls oder an Ölfilter, welche an Brennkraftmaschine angeordnet sind Schraubverschlüsse vorgesehen, die geöffnet werden müssen und welche eine Öffnung freigeben zum Entfemen des Öls aus dem Behälter oder aus dem Filter. Teilweise wird Öl aus dem Filter auch dadurch entfernt, dass der Deckel von dem Filtergehäuse abgeschraubt wird.

Ein Nachteil dieser Systeme liegt darin, dass das Öl undefiniert abfließt und die Verschmutzungsgefahr sehr groß ist.

Aus der US 3,538,950 ist eine Kupplung für ein Rohr zu entnehmen, bei welchem eine Druckfeder dargestellt, wobei eine Kugel durch einen Stößel entgegen der Kraft der Druckfeder bewegt wird. Beim Zurückbewegen des Stößels soll die Kugel wiederum die Öffnung verschließen.

Die Aufgabe der Erfindung liegt darin, eine Schnellkupplung für das Öffnen eines Ventils zu schaffen, welche unter besonderen Betriebsbedingungen, insbesondere hoher thermischer Beanspruchung eine zuverlässige Betätigung eines Ventils ermöglicht.

Diese Aufgabe wird durch die Merkmale des unabhängigen Anspruchs 1 gelöst.

Das Ziel der Erfindung liegt damit in der Schaffung eines Flüssigkeitablaufs bei dem die Flüssigkeit unmittelbar in einen Schlauch geleitet wird. Hierzu ist an einem Flüssigkeitsbehälter, beispielsweise einer Ölwanne oder einem Ölfilter, welcher hängend an einer Brennkraftmaschine angeordnet ist, ein Ventil vorgesehen. Dieses Ventil verschließt eine Ablauföffnung. Die erforderliche Schließkraft wird über eine Druckfeder aufgebracht. Zum Öffnen des Ventils wird eine Schnellkupplung aufgesteckt.

Der Vorteil der Erfindung liegt darin, dass ohne Verschmutzungsgefahr die Flüssigkeit aus dem Behälter oder dem Filter abfließen kann.

Gemäß der Erfindung ist das Ventil mit einer Ventilplatte versehen, wobei eine Druckfeder für eine zuverlässige Abdichtung zwischen Ventilplatte und einem Ventilsitz sorgt. Der Flüssigkeitsdruck in dem Behälter oder in dem Filter erzeugt eine zusätzliche Schließkraft, so dass ein unbeabsichtigtes Öffnen während des Betriebs nicht erfolgen kann.

Nach einer Ausgestaltung der Erfindung ist vorgesehen, einen Rastmechanismus an der Schnellkupplung anzuordnen. Dieser weist einen Kipphebel auf, der mit geeigneten Rastelementen des Ventils zusammenwirkt. Durch diese Verrastung ist ein unbeabsichtigtes Lösen der Schnellkupplung nicht möglich.

Weiterbildungsgemäß ist in dem Behälter ein Überdruckventil vorgesehen, welches eine Druckbegrenzung gewährleistet.

Nach einer weiteren Ausgestaltung der Erfindung wird eine Wirkkombination zwischen Überdruckventil und Ventil dahingehend erzielt, dass der Träger für das Überdruckventil gleichzeitig das Lager für das Ventil bildet. Dadurch kann eine kompakte Einheit von Überdruckventil und Ventil gebildet werden. Diese Einheit läßt sich in den Flüssigkeitsbehälter bzw. in das Filtergehäuse adaptieren.

Diese und weitere Merkmale von bevorzugten Weiterbildungen der Erfindung gehen außer aus den Ansprüchen auch aus der Beschreibung und der Zeichnung hervor.

### Zeichnung

Weitere Einzelheiten der Erfindung werden in der Zeichnung anhand von schematischen Ausführungsbeispielen beschrieben. Hierbei zeigen
- Figur 1: die schematische Darstellung der Wirkverbindung zwischen einem Ölfiltergehäuse und einer Schnellkupplung,
- Figur 2: Halbschnittdarstellungen eines Ölfiltergehäuses mit einer Schnellkupplung.

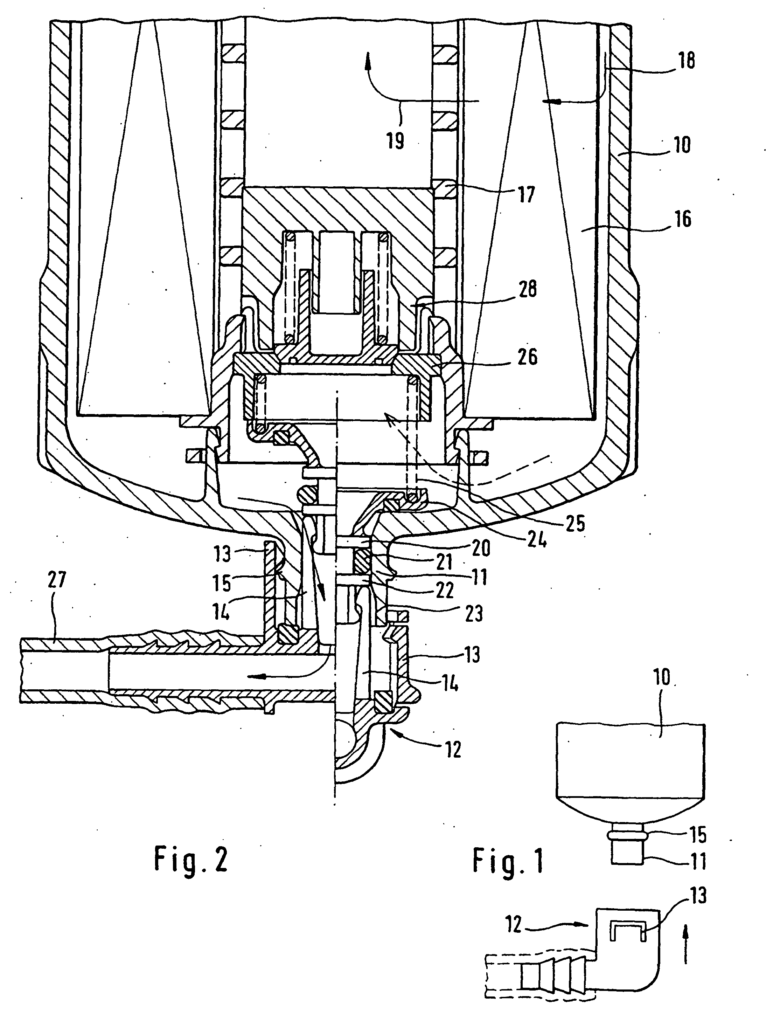

In Figur 1 ist schematisch ein Ölfiltergehäuse 10 dargestellt, dieses weist einen Auslauf 11 auf, der mit einem hier nicht näher dargestellten Ventil verschlossen ist. Zum Öffnen des Auslaufs dient eine Schnellkupplung 12, welche wenigstens einen Kipphebel 13 aufweist. Dieser Kipphebel greift beim Aufstecken der Schnellkupplung 12 über den Wulst 15 des Ölfiltergehäuses und bewirkt eine Verrastung.

In Figur 2 ist in dem rechtsseitigen Halbschnitt dargestellt, wie die Schnellkupplung 12 auf den Auslauf 11 aufgesteckt wird. Der linksseitige Halbschnitt zeigt die fest mit dem Ölfiltergehäuse verbundene Schnellkupplung 12 bei geöffnetem Ventil, welches ein Ablaufen der Flüssigkeit bzw. des Öls ermöglicht. In dem Ölfiltergehäuse 10 befindet sich ein konzentrisch angeordnetes Filterelement 16, welches auf einem Stützkörper 17 befestigt ist. Über einen hier nicht dargestellten Rohflüssigkeitszulauf strömt das Öl in das Ölfiltergehäuse ein. Gemäß Pfeil 18 fließt das Öl durch das Filterelement 16 und verläßt über den Stützkörper 17 gemäß Pfeil 19 und über einen hier nicht dargestellten Reinflüssigkeitsauslaß das Gehäuse.

Der. Auslauf 11 ist mit einem Ventil verschlossen. Dieses Ventil besteht aus Ventilplatte 20, die einen O-Ring 21 aufweist. Dieser O-Ring ist über einen Wulst 22 gekammert und verschließt die Öffnung 23 des Auslaufs 11. Die Ventilplatte 20 ist mit einer Aufnahme 24 für eine Druckfeder 25 versehen. Diese Druckfeder hält das Ventil in der hier gezeigten Geschlossenstellung und stützt sich an einem Träger 26 ab. An dem Träger ist ein Überdruckventil 28 befestigt, welches eine Öffnung zwischen Rohflüssigkeitsbereich und Reinflüssigkeitsbereich in bekannter Weise verschließt.

Die Schnellkupplung 12 ist in dem rechtsseitigen Halbschnitt zunächst nur angesetzt, das heißt die Schnappelemente 14 liegen an dem Ventil an. Ebenso befindet sich der Kipphebel 13 vor dem Auslauf 11 und damit noch nicht in Kontakt mit dem Ölfiltergehäuse 10. Die Schnellkupplung 12 ist mit einem Schlauch 27 versehen. Dieser Schlauch führt zu einem hier nicht dargestellten Auffangbehälter.

Der linksseitige Halbschnitt zeigt die Wirkverbindung zwischen Ventil und Schnellkupplung. Das Schnappelement 14 hat das Ventil mit der Ventilplatte 20 nach oben bewegt, damit ist die Öffnung 23 frei. Das in dem Ölfiltergehäuse befindliche Öl kann über den Schlauch 27 ablaufen. Die Rastverbindung zwischen Schnellkupplung und Ölfiltergehäuse erfolgt mit dem Kipphebel 13, welcher über den Wulst 15 greift und ein Entfernen der Schnellkupplung nur unter Anwendung einer bestimmten definierten Abzugskraft ermöglicht. Nach dem vollständigen Ablaufen des Öls kann die Schnellkupplung wieder abgezogen werden. Das Ventil schließt zuverlässig und das Ölfiltergehäuse kann erneut befüllt werden.

## Patentansprüche

1. Ein Ventil aufweisende Schnellkupplung für das Öffnen des Ventils zum Ablauf von Flüssigkeit, insbesondere Öl aus einem Ölfilter oder dem Ölsammelbehälter einer Brennkraftmaschine, wobei eines oder mehrere Schnappelemente (14) vorgesehen sind und wobei die Schnellkupplung insbesondere mit einem Abflussschlauch (27) verbunden ist,
**dadurch gekennzeichnet, daß**
- das Ventil aus einer Ventilplatte (20) besteht, welche über eine Druckfeder (25) an einem Ventilsitz abdichtend anliegt und
- zum Öffnen des Ventils die Schnappelemente (14) der Schnellkupplung, welche zum Öffnen des Ventils in dieses einrasten, derart, daß die Schnappelemente (14) selbst die Ventilplatte (20) umfassen, so daß eine gesteuerte Bewegung der Ventilplatte (20) erfolgt, eine Kraft auf die Ventilplatte (20) entgegen der Druckfeder (25) ausüben und eine Verschiebung der Ventilplatte (20) in die Offenstellung bewirken.

2. Schnellkupplung nach Anspruch 1, **dadurch gekennzeichnet, daß** ein Rastmechanismus in Form von wenigstens einem Kipphebel (13) vorgesehen ist, wobei der Rastmechanismus mit Rastelementen des Ventils zusammenwirkt.

3. Schnellkupplung nach einem der vorherigen Ansprüche, **dadurch gekennzeichnet, daß** die das Ventil aufweisende Schnellkupplung in einem Ölfiltergehäuse (10) vorgesehen ist, wobei in dem Ölfiltergehäuse (10) ein Filterelement vorgesehen ist, das Ölfiltergehäuse (10) einen Rohölflüssigkeitszulauf und einen Reinölflüssigkeitsablauf aufweist und femer ein Überdruckventil (28) zwischen Rohölbereich und Reinölbereich aufweist.

4. Schnellkupplung nach Anspruch 4, **dadurch gekennzeichnet, daß** das Überdruckventil (28) einen Ventilsitz aufweist, welcher gleichzeitig zur Abstützung der Druckfeder (25) vorgesehen ist.

## Claims

1. Quick-connect coupling, which includes a valve, for the opening of the valve to discharge liquid, more especially oil from an oil filter or from the oil collecting sump of an internal combustion engine, wherein one or more snap-type elements (14) are provided and wherein the quick-connect coupling is connected more especially to a run-off hose (27),
**characterised in that**
- the valve comprises a valve plate (20), which sealingly abuts a valve seat by means of a compression spring (25) and
- to open the valve, the snap-type elements (14) of the quick-connect coupling, which, to open the valve, lock into position in said valve in such a manner that the snap-type elements (14 themselves surround the valve plate (20) such that a controlled movement of the valve plate (20) is effected, exert a force onto the valve plate (20) in opposition to the compression spring (25) and effect a displacement of the valve plate (20) into the open position.

2. Quick-connect coupling according to claim 1, **characterised in that** a locking mechanism is provided in the form of at least one rocker arm (13), wherein the locking mechanism interacts with locking elements of the valve.

3. Quick-connect coupling according to one of the preceding claims, **characterised in that** the quick-connect coupling, which includes the valve, is provided in an oil filter housing (10), wherein a filter element is provided in the oil filter housing (10), the oil filter housing (10) includes an unfiltered liquid inlet and a filtered liquid outlet and, in addition, includes a pressure-relief valve (28) between the unfiltered oil region and the filtered oil region.

4. Quick-connect coupling according to claim 4, **characterised in that** the pressure-relief valve (28) includes a valve seat, which is at the same time provided for supporting the compression spring (25).

## Revendications

1. Raccord pompier muni d'une soupape pour l'ouverture de cette dernière afin de permettre l'écoulement de liquide, notamment d'huile sortant d'un filtre à huile ou d'un collecteur d'huile d'un moteur à combustion interne, un ou plusieurs éléments à déclic (14) étant prévus et le raccord pompier étant notamment raccordé à un tube d'écoulement (27),
**caractérisé en ce que**
- la soupape se compose d'une lame de soupape (20) appuyée sur un siège de soupape par un ressort de pression (25) de manière à en assurer l'étanchéité, et
- pour ouvrir la soupape, les éléments à déclic (14) du raccord pompier s'encliquettent dans cette soupape afm de l'ouvrir de telle sorte que les éléments à déclic (14) entourent eux-mêmes la lame de soupape (20), entraînant son mouvement commandé, et exercent une force sur cette lame de soupape (20) à l'encontre du ressort de pression (25) et la déplacent en position d'ouverture.

2. Raccord pompier selon la revendication 1,
**caractérisé en ce qu'**
un mécanisme d'encliquetage sous la forme d'au moins un levier oscillant (13) agit conjointement avec des éléments d'encliquetage de la soupape.

3. Raccord pompier selon l'une quelconque des revendications précédentes,
**caractérisé en ce que**
le raccord pompier présentant la soupape est prévu dans un carter du filtre à huile (10), un élément filtrant étant placé dans le carter du filtre à huile (10), ce dernier présentant un écoulement de liquide d'huile brute et un écoulement de liquide d'huile pure ainsi qu'une soupape de surpression (28) placée entre la zone d'huile brute et la zone d'huile pure.

4. Raccord pompier selon la revendication 4,
**caractérisé en ce que**
la soupape de surpression (28) présente un siège de soupape qui est simultanément prévu pour soutenir le ressort de pression (25).
